# EUROPÄISCHE PATENTSCHRIFT

(11) **EP 3 225 572 B1**
(45) Veröffentlichungstag und Bekanntmachung des Hinweises auf die Patenterteilung: **29.08.2018**
(21) Anmeldenummer: 17162350.7
(22) Anmeldetag: 22.03.2017
(51) Int. Cl.: B65G 19/02, B65G 23/14, B65G 47/61

(54) **FÖRDERVORRICHTUNG ZUR BEFÖRDERUNG VON HÄNGENDEN GEGENSTÄNDEN**
CONVEYING DEVICE FOR CONVEYING HANGING ITEMS
DISPOSITIF DE TRANSPORT D'OBJETS SUSPENDUS

(30) Priorität: 29.03.2016 DE 102016105716
(43) Veröffentlichungstag der Anmeldung: 04.10.2017
(73) Patentinhaber: Dematic GmbH, 63150 Heusenstamm (DE)
(72) Erfinder: Otto, Thomas, 33659 Bielefeld (DE)
(74) Vertreter: Moser Götze & Partner Patentanwälte mbB

(56) Entgegenhaltungen:
- EP-A1- 2 886 494
- EP-A1- 2 910 499
- DE-A1-102006 007 936
- JP-A- S6 077 011

## Beschreibung

Die vorliegende Erfindung betrifft eine Fördervorrichtung zur Beförderung von hängenden Gegenständen gemäß dem Oberbegriff des Anspruchs 1.

Gattungsgemäße Fördervorrichtungen zur Beförderung von hängenden Gegenständen wie beispielsweise Kleidungsstücken, Taschen und dergleichen bestehen im Wesentlichen aus Schienenprofilen, in denen in einer oberen Laufbahn eine Förderkette geführt wird, die mit in einer unteren Laufbahn der Schienenprofile geführten Halteadaptern gekoppelt sind, die von der Förderkette in einer Förderrichtung mitgeführt werden.
Um unterschiedlich genutzte Förderstrecken miteinander zu verbinden, werden sogenannte Weichen eingesetzt. Solche Weichen werden beispielsweise als Sortierweichen genutzt, um aus einer Förderstrecke vorbestimmte Gegenstände auszusortieren, wobei diese Gegenstände aus einem als Sortierstrecke genutzten Schienenprofil mithilfe der Sortierweiche aussortiert und in eine Staustrecke weitergeleitet werden.
Von dieser Staustrecke werden die vorsortierten Gegenstände über eine Aufgabeweiche in ein weiteres Schienenprofil überführt, das sich an die Aufgabeweiche anschließt.
Obwohl diese Aufgabeweichen nur zeitweise von in einer solchen Staustrecke aufgestauten Gegenständen durchfahren werden, werden diese Aufgabeweichen bei den aus dem Stand der Technik bekannten Fördervorrichtungen, die oftmals mit einer Vielzahl hintereinander angeordneten Aufgabeweichen ausgestattet sind, permanent angetrieben, was mit einem hohen Energieaufwand und Verschleiß einhergeht. EP 2 886 494 A1 zeigt eine Fördervorrichtung nach dem Oberbegriff des Anspruchs 1. Aufgabe der vorliegenden Erfindung ist es, eine gattungsgemäße Fördervorrichtung derart weiterzuentwickeln, dass der Betrieb solcher Aufgabeweichen in kostengünstigerer Weise durchgeführt werden kann.
Diese Aufgabe wird durch eine Fördervorrichtung zur Beförderung von hängenden Gegenständen mit den Merkmalen des Anspruchs 1 gelöst.
Die erfindungsgemäße Fördervorrichtung zur Beförderung von hängenden Gegenständen weist ein erstes Schienenprofil mit einer ersten, oberen Laufbahn und einer unterhalb der ersten Laufbahn angeordneten zweiten Laufbahn auf. In der ersten Laufbahn des Schienenprofils ist eine Förderkette mit seitlichen Reibrollenandrückflächen, an die Reibrollen zum Antrieb der Förderkette andrückbar sind, in einer Förderrichtung kontinuierlich bewegbar.

Die zweite Laufbahn dient der Führung von Halteadaptern zur Halterung von zu befördernden Gegenständen, wobei in der zweiten Laufbahn des Schienenprofils ein rollbar gelagertes Kopfteil des jeweiligen Halteadapters mit der Förderkette gekoppelt ist.

Die Fördervorrichtung weist des Weiteren wenigstens eine Aufgabeweiche auf, über die die Halteadapter von einem zweiten Schienenprofil in das erste Schienenprofil hinein überführbar sind.

Die Aufgabeweiche selbst weist ein drittes Schienenprofil mit einer Laufbahn auf, entlang der das Kopfteil des jeweiligen Adapters rollbar führbar ist. Die Aufgabeweiche weist des Weiteren ein Antriebsband zur Förderung der Halteadapter entlang des dritten Schienenprofils sowie eine das Antriebsband antreibende Antriebsrolle auf.

Erfindungsgemäß ist auf einer der Antriebsrolle gegenüber liegenden Seite der Förderkette ein zwischen einer Aktivstellung und einer Passivstellung verstellbares Andruckstück angeordnet. Dabei ist der Verstellweg des Andruckstückes so bemessen, dass in der Aktivstellung des Andruckstückes die Förderkette in Berührung mit der Antriebsrolle steht und in der Passivstellung des Andruckstückes die Förderkette nicht in Berührung mit der Antriebsrolle steht, wobei in der Aktivstellung die Antriebsrolle von der Förderkette antreibbar ist.

Mit einer solchen Fördervorrichtung ist ein wesentlich kostengünstigeres Betreiben der Fördervorrichtung ermöglicht, da das Antriebsband der Aufgabeweiche nur dann angetrieben wird, wenn es im Prozessablauf notwendig ist, d.h. wenn aus dem zweiten Schienenprofil über die Aufgabeweiche Gegenstände in das erste Schienenprofil überführt werden sollen.

Insbesondere bei einer Fördervorrichtung mit einer Vielzahl von hintereinander angeordneten Aufgabeweichen ist durch die erfindungsgemäße Fördervorrichtung eine deutliche Energieeinsparung ermöglicht, da regelmäßig nur eine bzw. nur wenige der Aufgabeweichen zu einem vorbestimmten Zeitpunkt Gegenstände in das erste Schienenprofil überführt bzw. überführen, während die übrigen Aufgabeweichen still stehen. Dagegen werden bei aus dem Stand der Technik bekannten Fördervorrichtungen sämtliche Aufgabeweichen gleichzeitig und permanent angetrieben.

Zusätzlich ist durch die erfindungsgemäße Fördervorrichtung ermöglicht, den Antrieb der Förderkette im ersten Schienenprofil schwächer auszulegen, da der erforderliche Kraftaufwand zum Antreiben nur einer oder nur weniger Aufgabeweichen deutlich geringer ist als der Kraftaufwand zum permanenten Antreiben sämtlicher Aufgabeweichen, die an dem ersten Schienenprofil angeordnet sind. Dadurch können je nach Länge der Förderstrecke ein Antrieb oder mehrere Antriebe, die zum Antrieb der Förderkette des ersten Schienenprofils eingesetzt werden, zusätzlich eingespart werden.

Vorteilhafte Ausführungsvarianten der Erfindung sind Gegenstand der Unteransprüche.

Gemäß einer vorteilhaften Ausführungsvariante der Erfindung ist das bevorzugt als Gegenrolle ausgebildete Andruckstück in einer am ersten Schienenprofil angeordneten Rollenaufnahme festgelegt.

Besonders bevorzugt ist eine Drehachse der Gegenrolle federbelastet an einem Gehäuse der Rollenaufnahme aufgehängt, so dass die Drehachse der Gegenrolle entgegen einer Federkraft gegen die der Antriebsrolle abgewandten Reibrollenandrückfläche der Förderkette drückbar ist.

Denkbar ist auch, die Aufhängung der Drehachse der Gegenrolle so zu gestalten, dass die Drehachse der Gegenrolle entgegen einer Federkraft von der der Antriebsrolle abgewandten Reibrollenandrückfläche der Förderkette weggedrückt wird.

Alternativ ist auch denkbar, die Drehachse der Gegenrolle mechanisch zwischen der Aktivstellung und der Passivstellung zu verschieben.

Sämtliche der oben genannten Verstellmöglichkeiten sind in einfacher Weise am ersten Schienenprofil anbringbar.

Gemäß einer weiteren vorteilhaften Ausführungsvariante der Erfindung ist das zweite Schienenprofil als Staustrecke ausgebildet, mit wenigstens einer Stoppeinrichtung zur Blockierung und Freigabe einer Weiterförderung von Gegenständen zur Aufgabeweiche hin. Dabei ist die Stoppeinrichtung mit einer die Verstellung der Gegenrolle aktivierenden Schalteinrichtung gekoppelt, wobei durch eine Freigabe der Stoppeinrichtung die Gegenrolle von der Passivstellung in die die Förderkette in Berührung mit der Antriebsrolle bringende Aktivstellung verstellbar ist.

Durch die Kopplung der Stoppeinrichtung mit der Schalteinrichtung zur Verstellung der Gegenrolle von der Passivstellung in die Aktivstellung ist der Antrieb des Antriebsbandes der Aufgabeweiche in einfacher Weise an die Stoppeinrichtung gekoppelt, so dass durch Freischalten der Stoppeinrichtung zur Weiterförderung der zu befördernden Gegenstände aus der Staustrecke heraus in das erste Schienenprofil die Aktivierung der Aufgabeweiche erfolgt.

Nachfolgend werden Ausführungsbeispiele anhand der nachfolgenden Zeichnungen näher erläutert. Es zeigen:
Figur 1 eine schematische Draufsicht auf eine Ausführungsvariante einer erfindungsgemäßen Fördervorrichtung mit mehreren entlang des ersten Schienenprofils hintereinander geschalteten Aufgabeweichen und diesen vorgeschalteten, an einem weiteren Schienenprofil angeordneten Sortierweichen,
Figur 2 eine schematische Draufsicht auf einen mit II in Figur 1 bezeichneten Ausschnitt einer Ausführungsvariante einer erfindungsgemäßen Fördervorrichtung mit Darstellung eines ersten Schienenprofils und einer daran angeordneten Aufgabeweiche,
Figur 3 eine Seitenansicht des in Figur 2 gezeigten Ausschnitts der Fördervorrichtung und
Figur 4 eine weitere Seitenansicht der in Figur 2 gezeigten Fördervorrichtung aus einer anderen Blickrichtung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Förderrichtung, der Schienenprofile, der Laufbahn, der Förderkette, der Aufgabeweiche, der Stoppeinrichtung und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

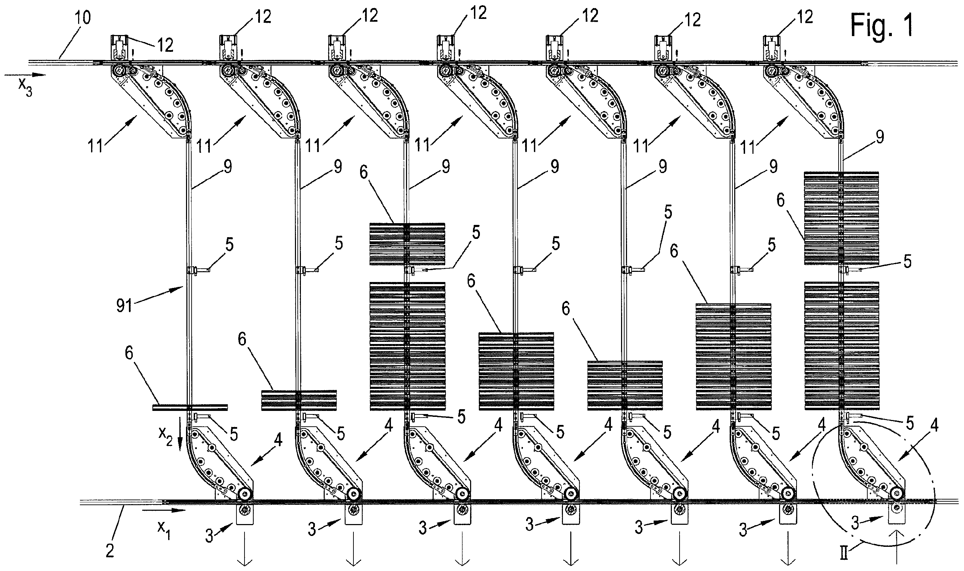

Figur 1 zeigt beispielhaft einen Ausschnitt einer Fördervorrichtung zur Beförderung von hängenden Gegenständen 6, beispielsweise von Bekleidungsstücken wie Mäntel, Anzüge oder auch Taschen, in denen Schuhe, Gürtel oder andere Kleinartikel befördert werden.

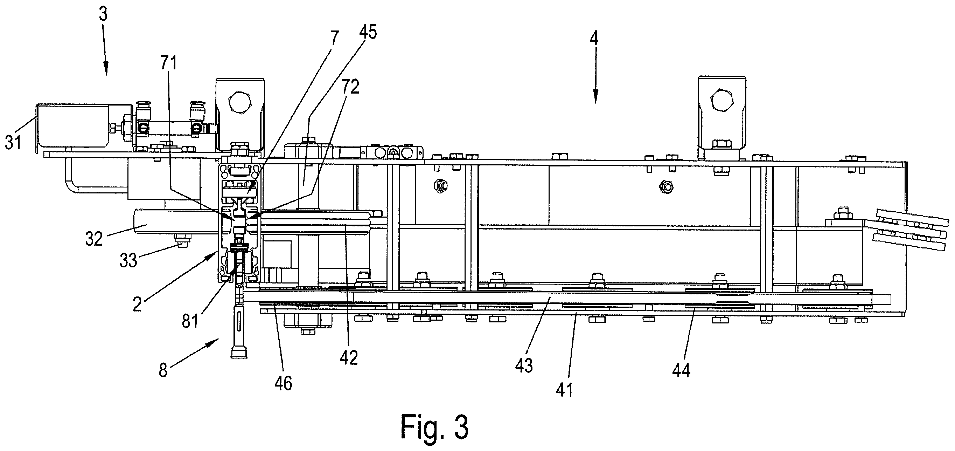

Die Fördervorrichtung weist ein erstes Schienenprofil 2 mit einer, wie in Figur 3 zu erkennen ist, ersten oberen Laufbahn 21 und einer unterhalb der ersten Laufbahn 21 angeordneten zweiten Laufbahn 22 auf.

In der ersten Laufbahn 21 des Schienenprofils 2 ist eine in einer Förderrichtung x₁ kontinuierlich bewegbare Förderkette 7 eingesetzt. Die Förderkette 7 weist seitliche Reibrollenandrückflächen auf, an die Reibrollen zum Antrieb der Förderkette 7 andrückbar sind. Die dem Antrieb der Förderkette 7 dienenden Reibrollen (nicht gezeigt) sind dabei in vorbestimmten Abständen entlang des ersten Schienenprofils 2 am Schienenprofil 2 festgelegt.

Die untere, zweite Laufbahn 22 dient der Lagerung von Halteadaptern 8 zur Halterung der zu befördernden Gegenstände 6. Dabei ist ein Kopfteil 81 des jeweiligen Halteadapters 8 in der zweiten Laufbahn 22 des Schienenprofils 2 rollbar gelagert und mit der in der ersten, oberen Laufbahn 21 laufenden Förderkette 7 gekoppelt. Die zu befördernden hängenden Gegenstände 6, beispielsweise auf Bügeln aufgehängte Bekleidungsoberteile wie Oberhemden oder Jacken, werden zur Beförderung mit dem Bügel in eine Aufnahme des Halteadapters 8 eingehängt und zusammen mit dem Halteadapter 8 entlang des ersten Schienenprofils 2 befördert.

Die durch das erste Schienenprofil 2 gebildete Laufstrecke der Fördervorrichtung ist hier bevorzugt als sogenannter Abzugsförderer ausgebildet. Ein solcher Abzugsförderer zeichnet sich dadurch aus, dass die Kettenglieder der Förderkette 7 einerseits derart mit den Halteadaptern 8 gekoppelt sind, dass diese von den Kettengliedern der Förderkette 7 mitgenommen werden, andererseits im Falle einer Aufstauung der Halteadapter 8 bzw. der zu befördernden hängenden Gegenstände 6 sich die Halteadapter 8 vom jeweiligen Kettenglied lösen und beispielsweise über die Kopfteile 81 der Halteadapter 8 hinweggleiten, so dass die Förderkette 7 trotz lokaler Aufstauung von Halteadaptern 8 bzw. zu befördernden hängenden Gegenständen 6 sich kontinuierlich in Förderrichtung x₁ bewegt.

Zur Aufgabe von zu befördernden hängenden Gegenständen 6 auf das erste Schienenprofil 2 aus einem zweiten Schienenprofil 9 ist wenigstens eine Aufgabeweiche 4 vorgesehen. In der in Figur 1 gezeigten Ausführungsvariante sind längs des ersten Schienenprofils 2 eine Vielzahl von Aufgabeweichen 4 hintereinander am ersten Schienenprofil 2 angeordnet.

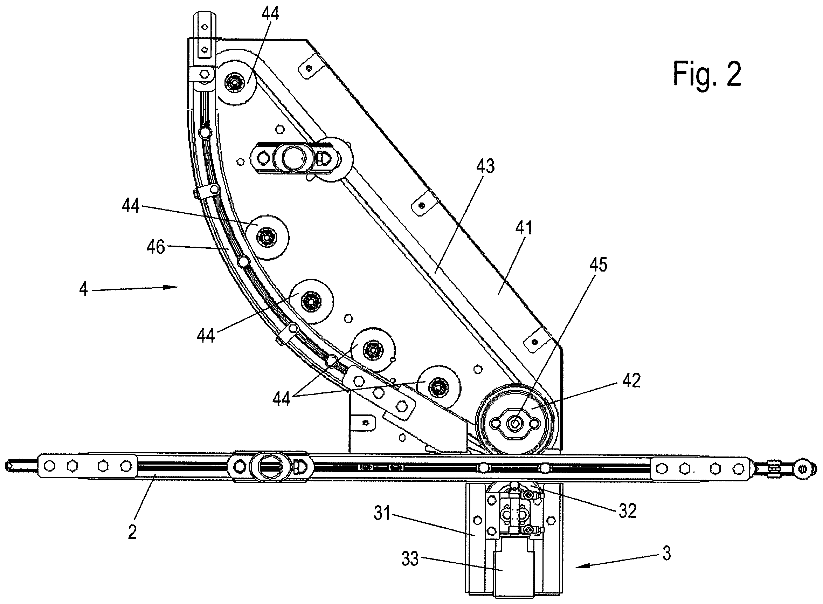

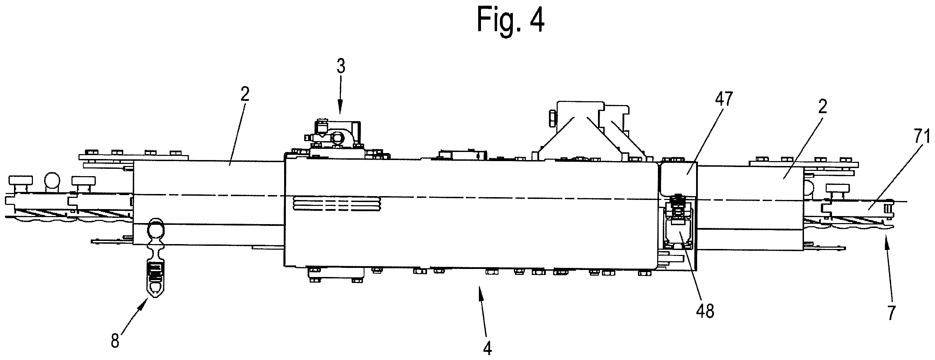

Die Aufgabeweiche 4 weist, wie in den Figuren 2-4 gezeigt ist, ein drittes Schienenprofil 46 auf, mit einer Laufbahn 47, entlang der das Kopfteil 81 des jeweiligen Adapters 8 rollbar führbar ist.

Zur Beförderung der Halteadapter 8 in Transportrichtung x₂ entlang des dritten Schienenprofils 46 ist ein Antriebsband 43 vorgesehen. Dieses Antriebsband 43 wird von einer Antriebsrolle 42 angetrieben.

Die Antriebsrolle 42 ist unmittelbar neben der Förderkette 7 des ersten Schienenprofils 2 angeordnet. Die Antriebsrolle 42 sitzt auf einer an einem Gehäuse 41 der Aufgabeweiche 4 montierten Drehachse 45. Auf dieser Drehachse 45 ist, wie in Figur 3 zu erkennen, unterhalb der Antriebsrolle 42 eine Übertragungsrolle 46 montiert ist, wobei das Antriebsband 43 auf einer Kreisabschnittsfläche der Mantelfläche der Übertragungsrolle 46 aufliegt. Das Antriebsband 43 ist dabei über weitere Spannrollen 44 derart aufgespannt, dass das Antriebsband 43 parallel zum Verlauf des Schienenprofils 46 der Aufgabeweiche 4 in Förderrichtung x₂ bewegbar ist.

Wie in den Figuren 2 und 3 gezeigt, ist auf einer der Antriebsrolle 42 gegenüberliegenden Seite der Förderkette 7 zwischen einer Aktivstellung und einer Passivstellung verstellbares Andruckstück 32 angeordnet.

Das Andruckstück ist, wie hier dargestellt, vorzugsweise als Gegenrolle 32 ausgebildet, die senkrecht zu ihrer Drehachse zwischen der Aktivstellung und der Passivstellung verstellbar ist.

Der Verstellweg dieses Andruckstückes 32 zwischen der Aktivstellung und der Passivstellung ist dabei so bemessen, dass in der Aktivstellung des Andruckstückes 32 die Förderkette 7 in Berührung mit der Antriebsrolle 42 steht und in der Passivstellung des Andruckstückes 32 die Förderkette 7 nicht in Berührung mit der Antriebsrolle 42 steht.

In der Aktivstellung ist die Antriebsrolle 42 dementsprechend von einer Förderkette 7 antreibbar. Dadurch ist ermöglicht, dass das Antriebsband 43 der Aufgabeweiche 4 nur dann angetrieben wird, wenn das Andruckstück 32 in die Aktivstellung gestellt ist. Dabei drückt das Andruckstück 32 die Förderkette 7 senkrecht zur Ebene der Reibrollenandrückfläche 71, 72 geringfügig, insbesondere um einen Millimeter bis fünf Millimeter, in Richtung der Antriebsrolle 42 der Aufgabeweiche 4, so dass die Antriebsrolle 42 die Reibrollenandrückfläche 72 berührt und damit das Antriebsband 43 der Aufgabeweiche 4 antreibt. Das Antriebsband 43 läuft im angetriebenen Zustand mit der gleichen Geschwindigkeit wie die Förderkette 7.

Anstelle einer Gegenrolle 32 ist es auch denkbar, das Andruckstück 32 beispielsweise mit einer Gleitfläche zu versehen, die in der Aktivstellung des Andruckstücks gegen die Reibrollenandrückfläche 71 der Förderkette 7 drückend an dieser entlanggleitet.

In der Ausführungsvariante, bei der das Andruckstück 32 als Gegenrolle ausgebildet ist, ist diese bevorzugt in einer am ersten Schienenprofil 2 angeordneten Rollenaufnahme 3 festgelegt. Besonders bevorzugt ist eine Drehachse 33 dieser Gegenrolle 32 federbelastet an einem Gehäuse 31 der Rollenaufnahme 3 aufgehängt.

Zur Verstellung der Gegenrolle 32 von der Passivstellung in die Aktivstellung wird die Drehachse 33 der Gegenrolle 32 entgegen der Federkraft eines (nicht dargestellten) Federteils gegen die der Antriebsrolle 42 abgewandte Reibrollenandrückfläche 71 der Förderkette 7 gedrückt.

Denkbar ist selbstverständlich auch eine kinematisch umgekehrte Anordnung, bei der die Drehachse 33 der Gegenrolle 32 entgegen der Federkraft von der Aktivstellung in die Passivstellung gedrückt wird. Ebenfalls denkbar ist auch ein Zurückziehen der Gegenrolle 32 entgegen der Federkraft von der Aktivstellung in die Passivstellung oder von der Passivstellung in die Aktivstellung.

Die Ansteuerung der Verstellung des Andruckstücks von der Passivstellung in die Aktivstellung erfolgt bevorzugt über eine Schalteinrichtung der Aufgabeweiche 4, die mit einer Stoppeinrichtung 5 gekoppelt ist, die der Blockierung und Freigabe einer Weiterförderung von Gegenständen 6 zur Aufgabeweiche 4 hin dient. Dabei ist, wie in Figur 1 zu erkennen ist, das zweite Schienenprofil 9 als Staustrecke ausgebildet, an dem wenigstens eine solche Stoppeinrichtung 5 angeordnet ist. In der in figur 1 gezeigten beispielhaften Darstellung sind an jedem der zweiten Schienenprofile 9 zwei solcher Stoppeinrichtung 5 montiert.

Diese Stoppeinrichtung 5 dient dazu, in der Staustrecke ankommende zu befördernde hängende Gegenstände 6 aufzustauen und zu einem vorbestimmten Zeitpunkt oder nach Erreichen einer vorbestimmten Anzahl von aufgestauten Gegenständen 6 von einer die Gegenstände 6 aufstauenden Stellung in die die Weiterförderung der Gegenstände 6 freigebende Stellung umzuschalten, so dass die Gegenstände 6 über die jeweilige Aufgabeweiche 4 in das erste Schienenprofil 2 überführt werden.

Dadurch wird erreicht, dass mit der Freischaltung der Stoppeinrichtung 5 gleichzeitig eine Aktivierung der Aufgabeweiche 4, sprich ein Antrieb des Antriebsbandes 43 der Aufgabeweiche 4 erfolgt.

Dahingegen steht das Antriebsband 43 der Aufgabeweiche 4 still, solange die Stoppeinrichtung 5 vor der jeweiligen Aufgabeweiche 4 sich an die Halteadapter 8 und damit die hängenden Gegenstände 6 blockierenden Stellung befindet, in der das Andruckstück 32 sich in seiner Passivstellung befindet, bei der die Förderkette 7 nicht in Kontakt mit der Antriebsrolle 42 der Aufgabeweiche 4 steht.

Die Kopplung der jeweiligen Stoppeinrichtungen 5 mit den jeweiligen Andruckstücken 32 der diesen Aufgabeweichen 4 erfolgt bevorzugt elektrisch. Denkbar ist aber auch eine mechanische oder auch hydraulische Kopplung.

Zur Mitnahme der Halteadapter 8 innerhalb der Aufgabeweiche 4 sind an einer von den Spannrollen 44 abgewandten Außenfläche des Antriebsband 43 der Aufgabeweiche 4 senkrecht zur Förderrichtung x₂ vorstehende, insbesondere als elastisch biegbare Finger ausgebildete Erhebungen ausgebildet.

Wie in Figur 1 des Weiteren gezeigt ist, erfolgt die Bestückung des bevorzugt als Staustecker ausgebildeten zweiten Schienenprofils 9 über ein viertes Schienenprofil 10, das mit einer Sortierweiche 11 mit dem zweiten Schienenprofil 9 verbunden ist. Dabei werden sämtliche zu sortierenden Gegenstände 6 zunächst entlang des vierten Schienenprofils 10 in Förderrichtung x₃ befördert.

An den an dem vierten Schienenprofil 10 hintereinander angeordneten jeweiligen Sortierweichen 11 erfolgt die Aussortierung der jeweiligen Gegenstände 6 in eines der zweiten Schienenprofile 9.

Das vierte Schienenprofil 10 ist dabei bevorzugt als sogenannter Sorter ausgebildet.

Die Sortierweichen 11 sind dabei dergestalt, dass der Antrieb jeweiliger Antriebsbänder dieser Sortierweichen 11 über die Förderkette des vierten Schienenprofils 10 erfolgt, welches entsprechend des ersten Schienenprofils 2 mit zwei Laufbahnen ausgebildet ist. Auch hier erfolgt der Antrieb über eine jeweilige Antriebsrolle, die jedoch, im Gegensatz zur Antriebsrolle 42 der Aufgabeweiche 4, permanent mit der in der ersten oberen Laufbahn des dritten Schienenprofils 10 laufenden Förderkette in Kontakt steht, wobei auch hier Gegendruckrollen 12 zum Ausgleich der Andruckkräfte der Antriebsrolle auf die Förderkette des vierten Schienenprofils dienen.

Die Antriebsrolle der Sortierweiche 11 ist dabei als sogenannter Übertrieb ausgebildet, so dass das Antriebsband der Sortierweiche 11 sich schneller bewegt als die Förderkette des vierten Schienenprofils.

### Bezugszeichenliste

- 2: erstes Schienenprofil
- 21: erste Laufbahn
- 22: zweite Laufbahn

- 3: Rollenaufnahme
- 31: Aufnahmegehäuse
- 32: Gegenrolle
- 33: Drehachse

- 4: Aufgabeweiche
- 41: Gehäuse
- 42: Antriebsrolle
- 43: Antriebsband
- 44: Spanrolle
- 45: Drehachse
- 46: Übertragungsrolle
- 47: drittes Schienenprofil
- 48: Laufbahn

- 5: Stoppeinrichtung
- 6: Gegenstand

- 7: Förderkette
- 71: Reibrollenandrückfläche
- 72: Reibrollenandrückfläche

- 8: Halteadapter
- 81: Kopfteil

- 9: zweites Schienenprofil
- 10: viertes Schienenprofil
- 11: Sortierweiche
- 12: Gegenrolle

- x₁: Förderrichtung
- x₂: Förderrichtung
- x₃: Förderrichtung

## Patentansprüche

1. Fördervorrichtung zur Beförderung von hängenden Gegenständen (6), aufweisend
- ein erstes Schienenprofil (2) mit einer ersten, oberen Laufbahn (21) und einer unterhalb der ersten Laufbahn (21) angeordneten zweiten Laufbahn (22),
- eine Förderkette (7) mit seitlichen Reibrollenandrückflächen (71, 72), an die Reibrollen zum Antrieb der Förderkette (7) andrückbar sind, wobei die Förderkette (7) in der ersten Laufbahn (21) des Schienenprofils (2) in einer Förderrichtung (x₁) kontinuierlich bewegbar ist,
- Halteadapter (8) zur Halterung von zu befördernden Gegenständen (6), mit jeweils einem in der zweiten Laufbahn (22) des Schienenprofils (2) rollbar gelagerten Kopfteil (81), das mit der Förderkette (7) gekoppelt ist,
- wenigstens eine Aufgabeweiche (4), über die die Halteadapter (8) von einem zweiten Schienenprofil (9) in das erste Schienenprofil (2) hinein überführbar sind,
- wobei die Aufgabeweiche (4) ein drittes Schienenprofil (46) mit einer Laufbahn (47), entlang der das Kopfteil (81) des jeweiligen Halteadapters (8) rollbar führbar ist, ein Antriebsband (43) zur Förderung der Halteadapter (8) entlang des dritten Schienenprofils (46) und eine das Antriebsband (43) antreibende Antriebsrolle (42) aufweist,
**dadurch gekennzeichnet, dass**
- auf einer der Antriebsrolle (42) gegenüberliegenden Seite der Förderkette (7) ein zwischen einer Aktivstellung und einer Passivstellung verstellbares Andruckstück (32) angeordnet ist,
- wobei der Verstellweg des Andruckstückes (32) so bemessen ist, dass in der Aktivstellung des Andruckstückes (32) die Förderkette (7) in Berührung mit der Antriebsrolle (42) steht und in der Passivstellung des Andruckstückes (32) die Förderkette (7) nicht in Berührung mit der Antriebsrolle (42) steht, wobei in der Aktivstellung die Antriebsrolle (42) von der Förderkette (7) antreibbar ist.

2. Fördervorrichtung nach Anspruch 1, **dadurch gekennzeichnet, dass** das Andruckstück (32) als senkrecht zu ihrer Drehachse zwischen einer Aktivstellung und einer Passivstellung verstellbare Gegenrolle (32) ausgebildet ist.

3. Fördervorrichtung nach Anspruch 2, **dadurch gekennzeichnet, dass** eine Drehachse (33) der Gegenrolle (32) federbelastet an einem Gehäuse (31) der Rollenaufnahme (3) aufgehängt ist.

4. Fördervorrichtung nach Anspruch 3, **dadurch gekennzeichnet, dass** die Drehachse (33) der Gegenrolle (32) entgegen einer Federkraft gegen die der Antriebsrolle (42) abgewandte Reibrollenandrückfläche (71) der Förderkette (7) drückbar ist.

5. Fördervorrichtung nach einem der vorstehenden Ansprüche, **dadurch gekennzeichnet, dass** das zweite Schienenprofil (9) als Staustrecke ausgebildet ist, mit wenigstens einer Stoppeinrichtungen (5) zur Blockierung und Freigabe einer Weiterförderung von Gegenständen (6) zur Aufgabeweiche (4) hin, wobei die Stoppeinrichtung (5) mit einer die Verstellung des Andruckstückes (32) aktivierenden Schalteinrichtung gekoppelt ist, wobei durch ein Freigabe der Stoppeinrichtung (5) das Andruckstück (32) von der Passivstellung in die die Förderkette (7) in Berührung mit der Antriebsrolle (42) bringende Aktivstellung verstellbar ist.

6. Fördervorrichtung nach Anspruch 5, **dadurch gekennzeichnet, dass** die Stoppeinrichtungen (5) mit der das Andruckstück (32) aktivierenden Schalteinrichtung elektrisch gekoppelt ist.

7. Fördervorrichtung nach Anspruch 5, **dadurch gekennzeichnet, dass** die Stoppeinrichtungen (5) mit der das Andruckstück (32) aktivierenden Schalteinrichtung mechanisch oder hydraulisch gekoppelt ist.

8. Fördervorrichtung nach einem der vorstehenden Ansprüche, **dadurch gekennzeichnet, dass** an einer Außenfläche des Antriebsbandes (43) senkrecht zur Förderrichtung (x₂) vorstehende, insbesondere als elastisch biegbare Finger ausgebildete, Erhebungen zur Weiterbeförderung der Halteadapter (8) in Förderrichtung (x₂) ausgebildet sind.

## Claims

1. Conveyor for conveying suspended objects (6), comprising
- a first rail profile (2) having a first, upper track (21) and a second track (22) arranged below the first track (21),
- a conveyor chain (7) having lateral friction roller pressing surfaces (71, 72), against which friction rollers can be pressed to drive the conveyor chain (7), wherein the conveyor chain (7) can be moved continuously in a direction of conveyance (x₁) in the first track (21) of the rail profile (2),
- holding adapters (8) for holding objects (6) to be conveyed, each having a head part (81) which is mounted so as to be able to roll in the second track (22) of the rail profile (2) and is coupled to the conveyor chain (7),
- at least one induct switch (4), via which the holding adapters (8) can be transferred from a second rail profile (9) into the first rail profile (2),
- wherein the induct switch (4) comprises a third rail profile (46) having a track (47), along which the head part (81) of the respective holding adapter (8) can be guided so as to be able to roll, a drive belt (43) for conveying the holding adapters (8) along the third rail profile (46), and a drive roller (42) driving the drive belt (43),
**characterised in that**
- a pressing piece (32) which can be adjusted between an active position and a passive position is arranged on a side of the conveyor chain (7) opposite the drive roller (42),
- wherein the adjustment path of the pressing piece (32) is dimensioned such that in the active position of the pressing piece (32) the conveyor chain (7) is in contact with the drive roller (42) and in the passive position of the pressing piece (32) the conveyor chain (7) is not in contact with the drive roller (42), wherein in the active position the drive roller (42) can be driven by the conveyor chain (7).

2. Conveyor as claimed in claim 1, **characterised in that** the pressing piece (32) is formed as a counter roller (32) which can be adjusted between an active position and a passive position perpendicular to its rotary spindle.

3. Conveyor as claimed in claim 2, **characterised in that** a rotary spindle (33) of the counter roller (32) is suspended from a housing (31) of the roller seat (3) in a spring-loaded manner.

4. Conveyor as claimed in claim 3, **characterised in that** the rotary spindle (33) of the counter roller (32) can be pressed against the friction roller pressing surface (71), facing away from the drive roller (42), of the conveyor chain (7) against a spring force.

5. Conveyor as claimed in any one of the preceding claims, **characterised in that** the second rail profile (9) is formed as a buffer section, having at least one stopping device (5) for blocking and releasing a further conveyance of objects (6) towards the induct switch (4), wherein the stopping device (5) is coupled to a switching device which activates the adjustment of the pressing piece (32), wherein by releasing the stopping device (5) the pressing piece (32) can be adjusted from the passive position into the active position which brings the conveyor chain (7) into contact with the drive roller (42).

6. Conveyor as claimed in claim 5, **characterised in that** the stopping device (5) is electrically coupled to the switching device which activates the pressing piece (32).

7. Conveyor as claimed in claim 5, **characterised in that** the stopping device (5) is mechanically or hydraulically coupled to the switching device which activates the pressing piece (32).

8. Conveyor as claimed in any one of the preceding claims, **characterised in that** in order to convey the holding adapters (8) further in the direction of conveyance (x₂), elevations - which protrude perpendicular to the direction of conveyance (x₂) and are formed in particular as elastically bendable fingers - are formed on an outer surface of the drive belt (43).

## Revendications

1. Dispositif de transport destiné à transporter des objets (6) suspendus, comprenant
- un premier profilé de rail (2) comportant une première piste de roulement supérieure (21) et une deuxième piste de roulement (22) disposée au-dessous de la première piste de roulement (21),
- une chaîne de transport (7) comportant des surfaces de pression de galet de friction latérale (71, 72) sur lesquelles peuvent presser des galets de friction destinés à entraîner la chaîne de transport (7), la chaîne de transport (7) pouvant être déplacée en continu dans la première piste de roulement (21) du profilé de rail (2) dans une direction de transport (x₁),
- des adaptateurs de maintien (8) destinés à maintenir des objets (6) à transporter et comportant chacun une partie de tête (81) qui peut être montée de manière à pouvoir rouler dans la deuxième piste de roulement (22) du profilé de rail (2) et qui est accouplée à la chaîne de transport (7),
- au moins un aiguillage d'alimentation (4) permettant de transférer l'adaptateur de maintien (8) d'un deuxième profilé de rail (9) dans le premier profilé de rail (2),
- l'aiguillage d'alimentation (4) comportant un troisième profilé de rail (46) muni d'une piste de roulement (47) le long de laquelle la partie de tête (81) de l'adaptateur de maintien (8) respectif peut être guidé de manière à pouvoir rouler, une courroie d'entraînement (43) destinée à transporter l'adaptateur de maintien (8) le long du troisième profilé de rail (46) et un galet d'entraînement (42) entraînant la courroie d'entraînement (43),
**caractérisé en ce que**
- une pièce de pression déplaçable entre une position active et une passive (32) est disposée sur un côté de la chaîne de transport (7), opposée au galet d'entraînement (42),
- le chemin de déplacement de la pièce de pression (32) étant dimensionné de telle sorte que, lorsque la pièce de pression (32) est dans la position active, la chaîne de transport (7) est en contact avec le galet d'entraînement (42) et, lorsque la pièce de pression (32) est dans la position passive, la chaîne de transport (7) n'est pas en contact avec le galet d'entraînement (42), le galet d'entraînement (42) pouvant être entraîné, dans la position active, par la chaîne de transport (7).

2. Dispositif de transport selon la revendication 1, **caractérisé en ce que** la pièce de pression (32) est réalisée sous la forme d'un galet antagoniste (32) déplaçable perpendiculairement à son axe de rotation entre une position active et une position passive.

3. Dispositif de transport selon la revendication 2, **caractérisé en ce qu'**un axe de rotation (33) du galet antagoniste (32) est suspendu, en étant contraint par un ressort, à un boîtier (31) du logement galet (3).

4. Dispositif selon la revendication 3, **caractérisé en ce que** l'axe de rotation (33) du galet antagoniste (32) peut être pressé, en s'opposant à une force de ressort, contre la surface de pression de galet de friction (71), opposée au galet d'entraînement (42), de la chaîne de transport (7).

5. Dispositif de transport selon l'une des revendications précédentes, **caractérisé en ce que** le deuxième profilé de rail (9) est réalisé sous la forme d'une zone tampon, comprenant au moins un moyen de butée (5) destiné à bloquer et libérer la poursuite du transport d'objets (6) en direction de l'aiguillage d'alimentation (4), le moyen de butée (5) étant accouplé à un moyen de commutation activant le déplacement de la pièce de pression (32), la pièce de pression (32) pouvant être déplacée, par libération du moyen de butée (5), de la position passive dans la position active dans laquelle la chaîne de transport (7) est amenée en contact avec le galet d'entraînement (42).

6. Dispositif de transport selon la revendication 5, **caractérisé en ce que** le moyen de butée (5) est couplé électriquement au moyen de commutation activant la pièce de pression (32).

7. Dispositif de transport selon la revendication 5, **caractérisé en ce que** le moyen de butée (5) est accouplé mécaniquement ou hydrauliquement au moyen de commutation activant la pièce de pression (32).

8. Dispositif de transport selon l'une des revendications précédentes, **caractérisé en ce que** des bosses saillant perpendiculairement à la direction de transport (x₂), réalisées en particulier sous la forme de doigts élastiquement flexibles, sont formées sur une surface extérieure de la courroie d'entraînement (43) pour poursuivre le transport de l'adaptateur de maintien (8) dans la direction de transport (x₂).
